# EUROPEAN PATENT SPECIFICATION

(11) **EP 2 590 372 B1**
(45) Date of publication and mention of the grant of the patent: **23.09.2015**
(21) Application number: 12175003.8
(22) Date of filing: 04.07.2012
(51) Int. Cl.: H04L 12/701, H04L 12/26, H04L 12/24, H04L 12/42, H04L 12/705, H04L 12/437

(54) **ETHERNET LOOP LOCATING METHOD, SWITCHING DEVICE AND SYSTEM**
VERFAHREN, VERMITTLUNGSVORRICHTUNG UND SYSTEM ZUR LOKALISIERUNG VON ETHERNET SCHLEIFEN
PROCÉDÉ, COMMUTATEUR ET SYSTÈME POUR LA LOCALISATION DE BOUCLES DANS UN RÉSEAU ETHERNET

(30) Priority: 04.11.2011 CN 201110345958
(43) Date of publication of application: 08.05.2013
(73) Proprietor: Huawei Technologies Co., Ltd., Longgang District Shenzhen, Guangdong 518129 (CN)
(72) Inventor: Zhang, Yan, 518129 Shenzhen (CN); Xie, Ying, 518129 Shenzhen (CN)
(74) Representative: Isarpatent

(56) References cited:
- WO-A2-2007/067746
- US-A1- 2004 218 539
- US-A1- 2007 253 346

## Description

### FIELD OF THE INVENTION

The present invention relates to field of communication, and in particular, to an Ethernet loop locating method, a switching device, and a system.

### BACKGROUND OF THE INVENTION

When the Ethernet line connection is incorrect or the network device configuration is incorrect, an Ethernet loop may appear, and a broadcast storm will occur in the Ethernet loop area, which will affect services of the entire network seriously.

To tackle the broadcast storm caused by the Ethernet loop, network maintainers expect the Ethernet switch to locate a related port of the loop fault automatically at high precision, and block or cut off a relevant port when an Ethernet loop fault occurs so as to avoid impact onto the entire network.

To minimize the risk of loop faults, a ring network protection protocol such as a Spanning Tree Protocol (Spanning Tree Protocol in English, STP for short) or an Ethernet ring protection switching (Ethernet Ring Protection Switching in English, ERPS for short) is generally deployed in an Ethernet ring network. The ring network protection protocols enable calculation of a logically loop-free network in a network physically connected into a loop. However, the ring network protection protocol such as the STP or ERPS prevents logical loops of the network only if the configuration is correct. If line connection or configuration is incorrect in the network, or a loop is formed inside an accessed subscriber network, the ring network protection protocol such as the STP or ERPS is unable to overcome the loop fault.

A common method for detecting and locating an Ethernet loop fault in the prior art is: The network device sends a group of special detection messages, and checks whether the messages are received by the same port repeatedly. If the messages are received by the same port repeatedly, it is determined that a loop occurs on the port. The defect of the solution is: When a loop fault occurs on the Ethernet, all ports on the loop generally receive the returned message. Consequently, although all ports that suffer the loop fault are found, specific faulty ports are not located precisely; meanwhile, if an Ethernet switch works in an environment with dense ports or plenty of virtual local area networks (Virtual Local Area Networks in English, VLANs for short) are deployed, the Ethernet switch needs to send plenty of detection messages, which imposes intense pressure on the device and network and affects the Ethernet performance seriously.

WO 2007/067746 A2 relates to a technique for detecting a loop between network devices such as customer and carrier edge devices involves counting the number of media access control (MAC) address moves that occur at a device and comparing the number of MAC address moves to a pre-established MAC move threshold. The technique includes artificially accelerating the MAC move count related to a MAC address when the MAC address is moving between a set of ports at which the MAC address was previously found. The MAC move count is artificially accelerated because movement of a MAC address between a set of ports at which the MAC address was previously found is a strong indication of loop. The MAC move count is artificially accelerated by weighting the MAC move count once it has been determined that a MAC is moving between a set of ports at which the MAC address was previously found.

US 2007/0253346 A1 relates to methods, apparatus, data struchtures, computer-readable media, and means for detecting potential forwarding loops in bridged networks. A switch monitors the movement of packet addresses in the forwarding table to different ports. If the port associated with an address changes multiple times in a short time duration, then a potential forwarding loop is detected, and a loop corrector is notified to take appropriate action to correct the problem, such as, but not limited to changing the state of a port to a blocking state or disabling an interface, etc. If there are multiple movements outside the short time duration, they may be correct movements adjusting to the actual reconfiguration of a network, and thus, these movements are effectively filtered out of consideration.

### SUMMARY OF THE INVENTION

Embodiments of the present invention provide an Ethernet loop locating method, a switching device, and a system to locate loop fault ports precisely.

A first aspect of the embodiment of the present invention provides an Ethernet loop locating method, which includes:
receiving an Ethernet frame, learning a MAC address according to a source MAC address of the Ethernet frame, and determining a learned associated port of the MAC address as a first port of the MAC address;
when the associated port of the MAC address undergoes hopping for a first time after the MAC address is learned, using the port after hopping as a second port of the MAC address, wherein the port is a port in the loop or a port facing the loop; and
determining the second port of the MAC address as a loop fault port if the total number of hops of the associated port of the MAC address in a specified time is greater than or equal to a preset threshold.

In a possible implementation of the first aspect of the embodiment of the present invention,
the step of receiving the Ethernet frame, learning the MAC address according to the source MAC address of the Ethernet frame, and determining the learned associated port of the MAC address as the first port of the MAC address comprises:
receiving the Ethernet frame, learning the MAC address according to the MAC address of the Ethernet frame, adding the learned associated port of the MAC address into a hop port set, and determining the learned associated port of the MAC address as the first port of the MAC address, wherein the hop port set comprises all associated ports of the MAC address that undergo hopping.

Based on the possible implementation of the first aspect of the embodiment of the present invention, the method further comprises:
when the associated port of the MAC address undergoes hopping for the first time after the MAC address is learned, adding the associated port of the MAC address after hopping into the hop port set, and using the port after hopping as a second port of the MAC address; when the associated port of the MAC address undergoes hopping not for the first time, and the associated port of the MAC address after hopping is not in the hop port set, adding the associated port of the MAC address after hopping into the hop port set.

After determining the second port as the loop fault port, the method further comprises:
sending loop fault alarm information, wherein the loop fault alarm information carries loop fault port information, the method optionally further comprises interrupting services of the loop fault port.

If the total number of hops of the associated port of the MAC address in the specified time is less than the preset threshold, the method optionally further comprises resetting a count value to zero without performing any other processing.

A second aspect of the embodiment of the present invention provides an Ethernet switching device, which includes:
a receiving module, configured to receive an Ethernet frame;
a MAC address learning module, configured to learn a MAC address according to a source MAC address of the Ethernet frame, and determine a learned associated port of the MAC address as a first port of the MAC address; and
a loop fault determining module, configured to: when the associated port of the MAC address undergoes hopping for a first time after the MAC address is learned, use the port after hopping as a second port of the MAC address, wherein the port is a port in the loop or a port facing the loop; and determine the second port of the MAC address as a loop fault port if the total number of hops of the associated port of the MAC address in a specified time is greater than or equal to a preset threshold.

In a possible implementation of the second aspect of the embodiment of the present invention, the loop fault determining module comprises:
a timing module, configured to use the port after hopping as a second port of the MAC address and start timing when the associated port of the MAC address undergoes hopping for the first time after the MAC address is learned; and
a count judging module, configured to determine the second port as a loop fault port if the total number of hops of the associated port of the MAC address in the specified time is greater than or equal to the preset threshold.

The Ethernet switching device optionally further comprises:
an alarming module, configured to send loop fault alarm information after the second port is determined as the loop fault port, wherein the loop fault alarm information carries loop fault port information.

The Ethernet switching device optionally further comprises an interrupting module, configured to interrupt services of the loop fault port after the second port is determined as the loop fault port.

A third aspect of the embodiment of the present invention provides an Ethernet system, which includes at least one outlined Ethernet switching device according to the second aspect of the embodiment of the present invention.

The Ethernet switching device is configured to: receive an Ethernet frame, learn a MAC address according to a source MAC address of the Ethernet frame, and determine a learned associated port of the MAC address as a first port of the MAC address; when the associated port of the MAC address undergoes hopping for a first time after the MAC address is learned, use the port after hopping as a second port of the MAC address, wherein the port is a port in the loop or a port facing the loop; and determine the second port of the MAC address as a loop fault port if the total number of hops of the associated port of the MAC address in a specified time is greater than or equal to a preset threshold.

Through the Ethernet loop locating method, switching device and system provided by the embodiments of the present invention, after an Ethernet frame is received, a MAC address is learned according to a source MAC address of the Ethernet frame, and an associated port of the source MAC address is determined as a first port of the MAC address; a port after hopping is used as a second port of the MAC address when the associated port of the MAC address undergoes hopping for a first time after the MAC address is learned; and the second port of the MAC address is determined as a loop fault port if the total number of hops of the associated port of the MAC address in a specified time is greater than or equal to a preset threshold. In this way, after a loop fault occurs on the Ethernet, the loop fault port can be located quickly and precisely without the need of sending a detection message and waiting for a returned message as in the prior art.

### BRIEF DESCRIPTION OF THE DRAWINGS

To illustrate the technical solution of the present invention or the prior art more clearly, the following outlines the accompanying drawings used in the description of the embodiments of the present invention or the prior art. Apparently, the accompanying drawings outlined below are illustrative rather than exhaustive, and persons of ordinary skill in the art can derive other drawings from them without making any creative effort.
FIG. 1 is a schematic diagram of an Ethernet loop in the prior art;
FIG. 2 is a schematic diagram of another Ethernet loop in the prior art;
FIG. 3 is a schematic flowchart of an Ethernet loop locating method according to an embodiment of the present invention;
FIG. 4 is a schematic flowchart of another Ethernet loop locating method according to an embodiment of the present invention;
FIG. 5 is a schematic flowchart of another Ethernet loop locating method according to an embodiment of the present invention;
FIG. 6 is a schematic structural diagram of an Ethernet switching device according to an embodiment of the present invention; and
FIG. 7 is a schematic structural diagram of another Ethernet switching device according to an embodiment of the present invention.

### DETAILED DESCRIPTION OF THE EMBODIMENTS

The following detailed description is given in conjunction with the accompanying drawings to provide a thorough understanding of the present invention. Evidently, the drawings and the detailed description are merely representative of particular embodiments of the present invention rather than all embodiments. All other embodiments, which can be derived by those skilled in the art from the embodiments given herein without making any creative effort, shall fall within the protection scope of the present invention.

In an Ethernet with a loop, hopping of an Ethernet switch port varies with the location of an Ethernet switch in the network. Generally, the location of a switch in the network has the following situations:

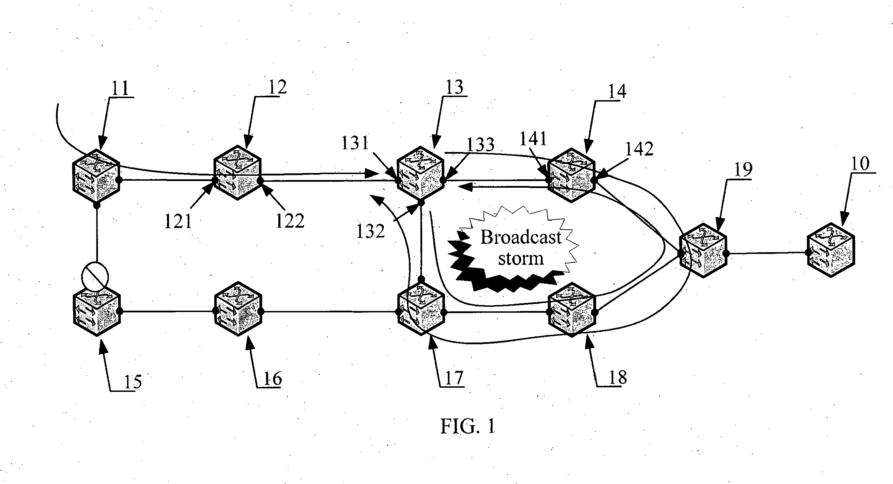

As shown in FIG. 1, the Ethernet includes a switch 11, a switch 12, a switch 13, a switch 14, a switch 15, a switch 16, a switch 17, a switch 18, a switch 19, and a switch 10. The ring network protection protocol blocks the path from the switch 11 to the switch 15. The switch 13, the switch 14, the switch 17, the switch 18, and the switch 19 form a loop.

When a switch is not on the loop, taking the switch 12 as an example, an Ethernet frame sent by a specific source station is forwarded by the switch 11 to the switch 12, and, after being forwarded by the switch 12, the Ethernet frame passes through the loop and is forwarded back through a port 122. Theoretically, an original port pointed at by a MAC address forwarding table is a trusted port, and the original port is the port 121 that receives the Ethernet frame for the first time. Let the port 121 be a first port of the switch 12. The port 121 and the port 122 are both MAC address associated ports that undergo hopping. Let the port 122 be a second port. Evidently, the second port faces the loop.

When the switch is in the loop and is not connected to the switches outside the loop, taking the switch 14 as an example, due to existence of the loop, the switch 13 sends an Ethernet frame to both the switch 14 and the switch 17, and the Ethernet frame is forwarded along the loop clockwise and counterclockwise respectively. The port 141 and the port 142 of the switch 14 are both MAC address associated ports that undergo hopping. Because the port 141 is the port that receives the Ethernet frame for the first time, let the port 141 be the first port, and therefore, the port 142 is the second port. Evidently, the second port is a port in the loop.

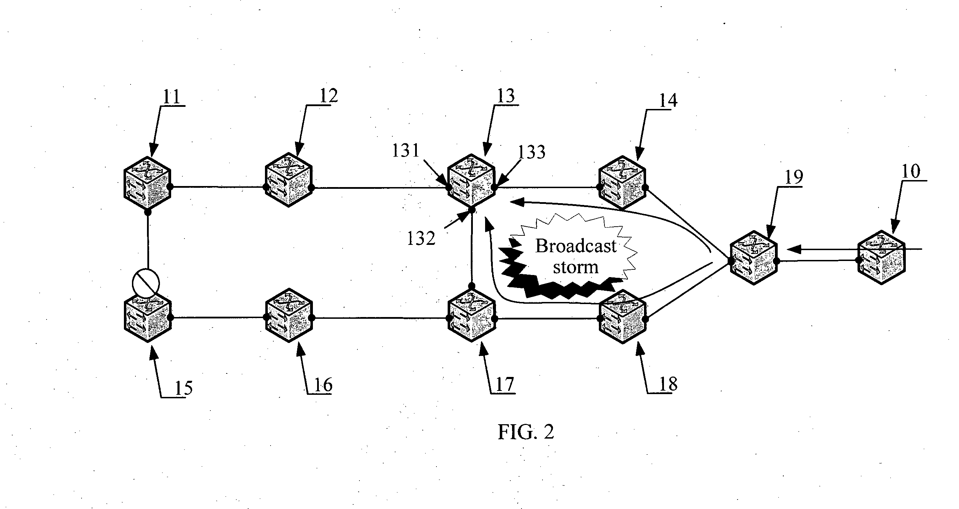

When a switch is in the loop and connected with a switch outside the loop, taking the switch 13 as an example, an Ethernet frame sent by a specific source station is forwarded by the switch 11 and the switch 12 to the port 131 of the switch 13, and the switch 13 sends the Ethernet frame to both the switch 14 and the switch 17 through the port 133 and the port 132 respectively, and receives the Ethernet frame forwarded by the switch 17 and the switch 14 through the port 133 and the port 132 respectively. The port 131, the port 132 and the port 133 of the switch 13 are all MAC address associated ports that undergo hopping. Let the port 131 that receives the Ethernet frame for the first time be a first port. In the order of hopping time, let the port 132 be a second port and let the port 133 be a third port. The hopping order is not fixed between the port 132 and the port 133. Therefore, it is also practicable to let the port 132 be the third port and let the port 133 be the second port. Evidently, the second port is a port in the loop. Specially, if the Ethernet frame sent by a specific source station is forwarded by the switch 10 into the loop, as shown in FIG. 2, the switch 13 may be in a scenario equivalent to that the switch 13 is in the loop and is not connected to any switch outside the loop, and the second port is still a port in the loop.

In summary, regardless of the scenario, except the port that receives the Ethernet frame for the first time, starting from receiving the Ethernet frame, the MAC address associated port that undergoes hopping for the first time (namely, the second port above) is necessarily a port in the loop or a port facing the loop.

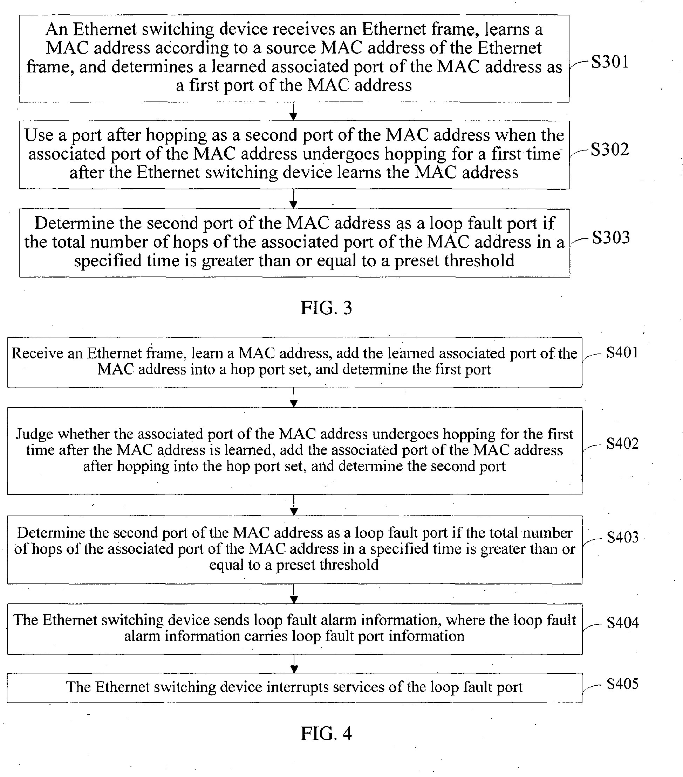

As shown in FIG. 3, an Ethernet loop locating method provided in an embodiment of the present invention includes the following steps:
S301: An Ethernet switching device receives an Ethernet frame, learns a MAC address according to a source MAC address of the Ethernet frame, and determines a learned associated port of the MAC address as a first port of the MAC address.
S302: Use a port after hopping as a second port of the MAC address when the associated port of the MAC address undergoes hopping for a first time after the Ethernet switching device learns the MAC address.
S303: Determine the second port of the MAC address as a loop fault port if the total number of hops of the associated port of the MAC address in a specified time is greater than or equal to a preset threshold.

Through the Ethernet loop locating method provided in the embodiment of the present invention, after an Ethernet frame is received, a MAC address is learned according to a source MAC address of the Ethernet frame, and an associated port of the source MAC address is determined as a first port of the MAC address; a port after hopping is used as a second port of the MAC address when the associated port of the MAC address undergoes the hopping for a first time after the MAC address is learned; and the second port of the MAC address is determined as a loop fault port if the total number of hops of the associated port of the MAC address in a specified time is greater than or equal to a preset threshold. In this way, after a loop fault occurs on the Ethernet, the loop fault port can be located quickly and precisely without the need of sending a detection message and waiting for a returned message as in the prior art. The precise locating of the loop fault port shortens the troubleshooting time of the loop, and quickens service recovery.

The following elaborates the Ethernet loop locating method illustrated in FIG. 3 with reference to the network architecture shown in FIG. 1.

Taking the switch 12 as an example, from the switch 11, the switch 12 receives an Ethernet frame sent by a specific source station, and learns a MAC address according to a source MAC address of the Ethernet frame. Because a learned associated port of the MAC address is the port 121 used by the switch 12 for receiving the Ethernet frame, it is determined that the port 121 is the first port of the MAC address.

When the associated port of the MAC address undergoes hopping for a first time after the MAC address is learned, namely, when the associated port of the MAC address hops into the port 122 (the second port of the MAC address), the switch 12 starts timing and compares whether the total number of hops of the associated port of the MAC address in a specified time is greater than or equal to a preset threshold. The timing length is the preset specified time. For example, the specified time may be preset to 10s, and the preset threshold may be set manually, to 20, for example. That is, once the associated port of the MAC address hops into the port 122, the timing begins, and lasts for 10s. If the total number of hops of the associated port of the MAC address is less than 20 within the 10s as counted by the switch 12, the timing stops, and the hop count value is reset to zero without any other processing. The switch 12 enters a next judgment cycle, and waits for a next hop of the associated port of the MAC address. If the total number of hops of the associated port of the MAC address in the 10s is greater than or equal to 20, it is determined that a loop fault occurs, and that the port 122 (the second port of the MAC address) is a loop fault port. Moreover, the port 122 (the second port of the MAC address) is a port facing the loop.

Further, as shown in FIG. 4, on the basis of illustration in FIG. 3, another Ethernet loop locating method provided in an embodiment of the present invention includes the following steps:
S401: An Ethernet switching device receives an Ethernet frame, learns a MAC address according to a source MAC address of the Ethernet frame, adds a learned associated port of the MAC address into a hop port set, and determines the learned associated port of the MAC address as a first port of the MAC address.

Specifically, after the learned associated port of the MAC address is added into the hop port set, an adding serial number of the associated port of the MAC address may be set to 1, and the port 1 is the first port of the MAC address. The hop port set includes all associated ports of the MAC address that undergo hopping.

S402: When the associated port of the MAC address undergoes hopping for the first time after the MAC address is learned, the Ethernet switching device adds the associated port of the MAC address after hopping into the hop port set, and uses the port after hopping as a second port of the MAC address; when the associated port of the MAC address undergoes hopping not for the first time, if the associated port of the MAC address after hopping is not in the hop port set, the Ethernet switching device adds the associated port of the MAC address after hopping into the hop port set.

Specifically, when the associated port of the MAC address undergoes hopping for the first time, the Ethernet switching device adds the associated port of the MAC address after hopping into the hop port set, and sets the adding serial number of the associated port of the MAC address after hopping to 2. When the associated port of the MAC address undergoes hopping not for the first time, and the associated port of the MAC address after hopping is not in the hop port set, after adding the associated port of the MAC address after hopping into the hop port set, the Ethernet switching device may set the serial number of the associated port of the MAC address in the order of joining the hop port set. The port 2 is the second port of the MAC address.

S403: Determine the second port of the MAC address as a loop fault port if the total number of hops of the associated port of the MAC address in a specified time is greater than or equal to a preset threshold.

After the Ethernet switching device adds the associated port of the MAC address after hopping into the hop port set, the port with the adding serial number being 2 is the second port of the MAC address.

S404: The Ethernet switching device sends loop fault alarm information, and the loop fault alarm information carries loop fault port information.

S405: The Ethernet switching device interrupts services of the loop fault port.

Note that the order between step S404 and step S405 may be random. That is, step S404 is performed before step S405, or step S405 is performed before step S404; or step S404 and step S405 are performed simultaneously. In FIG. 4, it is assumed that step S404 is performed before step S405.

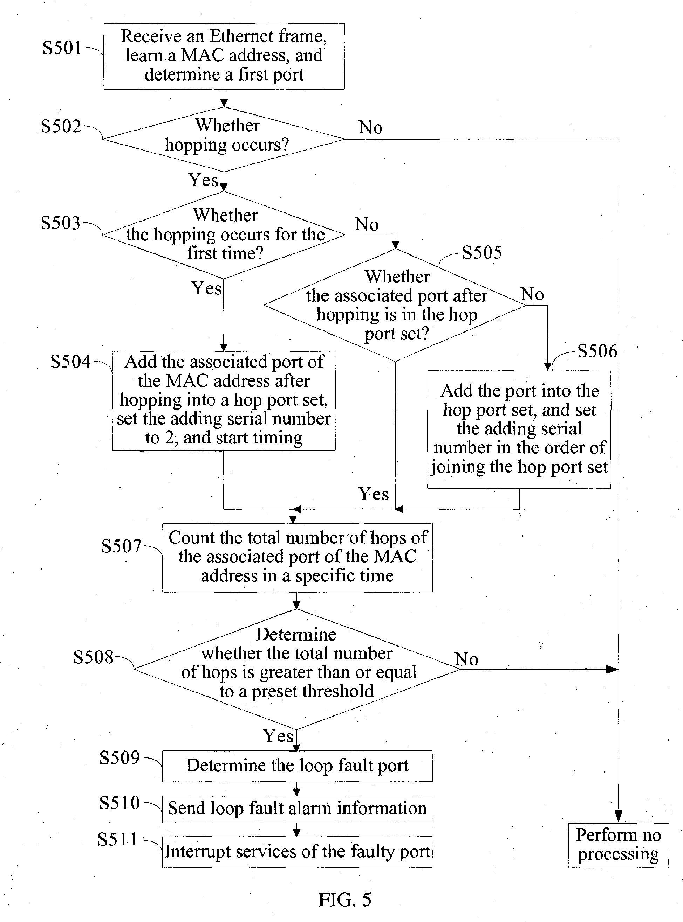

The following describes the Ethernet loop locating method shown in the embodiment FIG. 3 of the present invention with reference to FIG. 5, taking the switch 13 in FIG. 1 as an example.

S501: The switch 13 receives an Ethernet frame, learns a MAC address according to the MAC address of the Ethernet frame, and determines a first port.

Specifically, after the MAC address is learned, the associated port 131 of the learned MAC address is added into the hop port set, and the adding serial number of the port 131 is set to 1. The hop port set includes all associated ports of the MAC address that undergo hopping.

S502: The switch 13 checks whether the associated port of the MAC address undergoes hopping. If the associated port of the MAC address does not undergo hopping, no processing is performed; if the associated port of the MAC address undergoes hopping, step S503 is performed.

S503: When the associated port of the MAC address undergoes hopping for the first time, the switch 13 performs step S504; when the associated port of the MAC address undergoes hopping not for the first time, the switch 13 performs step S505.

S504: The switch 13 adds the associated port 132 of the MAC address after hopping into the hop port set, sets the adding serial number of the port to 2, starts timing, and performs S507.

S505: The switch 13 judges whether the associated port of the MAC address after hopping already exists in the hop port set. If yes, go to step S507; if not, go to step S506.

S506: The switch 13 adds the port 133 into the hop port set, and sets the serial number of the port 133 to 3 in the order of joining the hop port set.

S507: The switch 13 counts the total number of hops of the associated port of the MAC address in the specified time.

S508: The switch 13 determines whether the total number of hops of the associated port of the MAC address is greater than or equal to a preset threshold. If yes, go to step S509; if not, perform no processing.

S509: The switch 13 determines the port 132 (the port 2) as a loop fault port.

S510: The switch 13 sends loop fault alarm information, and the loop fault alarm information carries information of the port 2.

S511: The switch 13 interrupts services of the port 132 (the port 2).

The hop port set refers to a set of all associated ports of the MAC address that undergo hopping. In this embodiment of the present invention, the hop port set includes the port 131, the port 132, and the port 133.

Understandably, although the embodiment of the present invention uses the switch 13 as an example to describe the Ethernet loop locating method when the hop port set includes three ports, the method provided by the embodiment of the present invention is also applicable to the scenario that the hop port set includes more ports. The order between step S510 and step S511 may be random. That is, step S510 is performed before step S511, or step S511 is performed before step S510; or step S510 and step S511 are performed simultaneously. In FIG. 5, it is assumed that step S510 is performed before step S511.

Through the Ethernet loop locating method provided in this embodiment of the present invention, after an Ethernet frame is received, a MAC address is learned according to a source MAC address of the Ethernet frame, and an associated port of the source MAC address is determined as a first port of the MAC address; a port after hopping is used as a second port of the MAC address when the associated port of the MAC address undergoes hopping for a first time after the MAC address is learned; and the second port of the MAC address is determined as a loop fault port if the total number of hops of the associated port of the MAC address in a specified time is greater than or equal to a preset threshold. In this way, after a loop fault occurs on the Ethernet, the loop fault port can be located quickly and precisely without the need of sending a detection message and waiting for a returned message as in the prior art. The precise locating of the loop fault port shortens the troubleshooting time of the loop, and quickens service recovery. Meanwhile, because the service on the loop fault port is interrupted quickly, the loop is disrupted directly, and services of other ports are protected against impact of a broadcast storm.

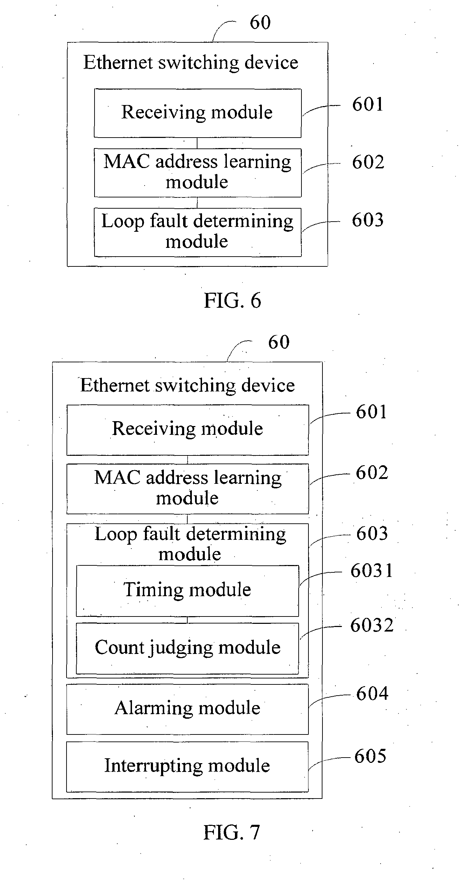

As shown in FIG. 6, an Ethernet switching device 60 provided in an embodiment of the present invention includes:
a receiving module 601, configured to receive an Ethernet frame;
a MAC address learning module 602, configured to learn a MAC address according to a source MAC address of the Ethernet frame, and determine a learned associated port of the MAC address as a first port of the MAC address; and
a loop fault determining module 603, configured to: use a port after hopping as a second port of the MAC address when the associated port of the MAC address undergoes hopping for a first time after the MAC address is learned; and determine the second port of the MAC address as a loop fault port if the total number of hops of the associated port of the MAC address in a specified time is greater than or equal to a preset threshold.

Through the Ethernet switching device provided in this embodiment of the present invention, after an Ethernet frame is received, a MAC address is learned according to a source MAC address of the Ethernet frame, and an associated port of the source MAC address is determined as a first port of the MAC address; a port after hopping is used as a second port of the MAC address when the associated port of the MAC address undergoes hopping for a first time after the MAC address is learned; and the second port of the MAC address is determined as a loop fault port if the total number of hops of the associated port of the MAC address in a specified time is greater than or equal to a preset threshold. In this way, after a loop fault occurs on the Ethernet, the loop fault port can be located quickly and precisely without the need of sending a detection message and waiting for a returned message as in the prior art. The precise locating of the loop fault port shortens the troubleshooting time of the loop, and quickens service recovery.

Further, as shown in FIG. 7, the loop fault determining module 603 may include:
a timing module 6031, configured to use the port after hopping as a second port of the MAC address and start timing when the associated port of the MAC address undergoes hopping for the first time after the MAC address is learned; and
a count judging module 6032, configured to determine the second port as a loop fault port if the total number of hops of the associated port of the MAC address in a specified time is greater than or equal to a preset threshold.

The Ethernet switching device 60 may further include:
an alarming module 604, configured to send loop fault alarm information after the second port is determined as the loop fault port, where the loop fault alarm information carries loop fault port information; and
an interrupting module 605, configured to interrupt services of the loop fault port after the second port is determined as the loop fault port.

In this way, after a loop fault occurs on the Ethernet, the loop fault port can be located precisely. The precise locating of the loop fault port shortens the troubleshooting time of the loop, and quickens service recovery. Meanwhile, because the service on the loop fault port is interrupted quickly, the loop is disrupted directly, and services of other ports are protected against impact of a broadcast storm.

An Ethernet system provided in an embodiment of the present invention includes at least one Ethernet switching device 60.

The Ethernet switching device 60 is configured to: receive an Ethernet frame, learn a MAC address according to a source MAC address of the Ethernet frame, and determine a learned associated port of the MAC address as a first port of the MAC address; use a port after hopping as a second port of the MAC address when the associated port of the MAC address undergoes hopping for a first time after the MAC address is learned; and determine the second port of the MAC address as a loop fault port if the total number of hops of the associated port of the MAC address in a specified time is greater than or equal to a preset threshold.

The Ethernet system provided in an embodiment of the present invention includes at least one Ethernet switching device. After an Ethernet frame is received, a MAC address is learned according to a source MAC address of the Ethernet frame, and an associated port of the source MAC address is determined as a first port of the MAC address; a port after hopping is used as a second port of the MAC address when the associated port of the MAC address undergoes hopping for a first time after the MAC address is learned; and the second port of the MAC address is determined as a loop fault port if the total number of hops of the associated port of the MAC address in a specified time is greater than or equal to a preset threshold. In this way, after a loop fault occurs on the Ethernet, the loop fault port can be located quickly and precisely without the need of sending a detection message and waiting for a returned message as in the prior art. The precise locating of the loop fault port shortens the troubleshooting time of the loop, and quickens service recovery.

Persons of ordinary skill in the art should understand that all or a part of the steps of the method according to the embodiments of the present invention may be implemented by a program instructing relevant hardware. The program may be stored in a computer readable storage medium. When the program runs, the program executes the steps of the method specified in any embodiment of the present invention. The storage medium may be any medium capable of storing program codes, such as a ROM, a RAM, a magnetic disk, or an optical disk.

The above descriptions are merely exemplary embodiments of the present invention, but not intended to limit the protection scope of the present invention. Any variations or replacement that can be easily derived by those skilled in the art without departing from the technical solution of the present invention shall fall within the protection scope of the present invention. Therefore, the protection scope of the present invention is subject to the appended claims.

## Claims

1. An Ethernet loop locating method, comprising:
receiving an Ethernet frame, learning a MAC address according to a source MAC address of the Ethernet frame, and determining a learned associated port of the MAC address as a first port of the MAC address (301);
when the associated port of the MAC address undergoes hopping for a first time after the MAC address is learned, using the port after hopping as a second port of the MAC address, wherein the port is a port in the loop or a port facing the loop (302); and
determining the second port of the MAC address as a loop fault port if the total number of hops of the associated port of the MAC address in a specified time is greater than or equal to a preset threshold (303).

2. The method according to claim 1, wherein:
the step of receiving the Ethernet frame, learning the MAC address according to the source MAC address of the Ethernet frame, and determining the learned associated port of the MAC address as the first port of the MAC address comprises:
receiving the Ethernet frame, learning the MAC address according to the MAC address of the Ethernet frame, adding the learned associated port of the MAC address into a hop port set, and determining the learned associated port of the MAC address as the first port of the MAC address, wherein the hop port set comprises all associated ports of the MAC address that undergo hopping (401).

3. The method according to claim 2, further comprising:
when the associated port of the MAC address undergoes hopping for the first time after the MAC address is learned, adding the associated port of the MAC address after hopping into the hop port set, and using the port after hopping as a second port of the MAC address (402); when the associated port of the MAC address undergoes hopping not for the first time, and the associated port of the MAC address after hopping is not in the hop port set, adding the associated port of the MAC address after hopping into the hop port set.

4. The method according to any one of claims 1 to 3, wherein:
after determining the second port as the loop fault port, the method further comprises:
sending loop fault alarm information, wherein the loop fault alarm information carries loop fault port information (404).

5. The method according to any one of claims 1 to 3, wherein:
after determining the second port as the loop fault port, the method further comprises:
interrupting services of the loop fault port (405).

6. The method according to any one of claims 1 to 3, wherein:
if the total number of hops of the associated port of the MAC address in the specified time is less than the preset threshold, the method further comprises resetting a count value to zero without performing any other processing.

7. An Ethernet switching device (60), comprising:
a receiving module (601), configured to receive an Ethernet frame;
a MAC address learning module (602), configured to learn a MAC address according to a source MAC address of the Ethernet frame, and determine a learned associated port of the MAC address as a first port of the MAC address; and
a loop fault determining module (603), configured to: when the associated port of the MAC address undergoes hopping for a first time after the MAC address is learned, use the port after hopping as a second port of the MAC address, wherein the port is a port in the loop or a port facing the loop; and determine the second port of the MAC address as a loop fault port if the total number of hops of the associated port of the MAC address in a specified time is greater than or equal to a preset threshold.

8. The device according to claim 7, wherein the loop fault determining module comprises:
a timing module (6031), configured to use the port after hopping as a second port of the MAC address and start timing when the associated port of the MAC address undergoes hopping for the first time after the MAC address is learned; and
a count judging module (6032), configured to determine the second port as a loop fault port if the total number of hops of the associated port of the MAC address in the specified time is greater than or equal to the preset threshold.

9. The device according to claim 7 or 8, wherein the Ethernet switching device further comprises:
an alarming module (604), configured to send loop fault alarm information after the second port is determined as the loop fault port, wherein the loop fault alarm information carries loop fault port information.

10. The device according to claim 7 or 8, wherein the Ethernet switching device further comprises:
an interrupting module (605), configured to interrupt services of the loop fault port after the second port is determined as the loop fault port.

11. An Ethernet system, comprising at least one Ethernet switching device according to any one of claims 7 to 10, wherein:
the Ethernet switching device is configured to: receive an Ethernet frame, learn a MAC address according to a source MAC address of the Ethernet frame, and determine a learned associated port of the MAC address as a first port of the MAC address; when the associated port of the MAC address undergoes hopping for a first time after the MAC address is learned, use the port after hopping as a second port of the MAC address, wherein the port is a port in the loop or a port facing the loop; and determine the second port of the MAC address as a loop fault port if the total number of hops of the associated port of the MAC address in a specified time is greater than or equal to a preset threshold.

## Patentansprüche

1. Ethernet-Schleifenlokalisierungsverfahren, das Folgendes umfasst:
Empfangen eines Ethernet-Rahmens, Erkennen einer MAC-Adresse gemäß einer Ursprungs-MAC-Adresse des Ethernet-Rahmens und Bestimmen eines erkannten zugeordneten Anschlusses der MAC-Adresse als einen ersten Anschluss der MAC-Adresse (301);
wenn der zugeordnete Anschluss der MAC-Adresse zum ersten Mal einem Springen unterzogen wird, nachdem die MAC-Adresse erkannt worden ist, Verwenden des Anschlusses nach dem Springen als einen zweiten Anschluss der MAC-Adresse, wobei der Anschluss ein Anschluss in der Schleife ist oder ein Anschluss ist, der zu der Schleife hin gerichtet ist (302); und
Bestimmen des zweiten Anschlusses der MAC-Adresse als einen Schleifenfehleranschluss, falls die Gesamtzahl von Sprüngen des zugeordneten Anschlusses der MAC-Adresse in einer spezifizierten Zeit größer als ein oder gleich einem voreingestellten Schwellenwert ist (303).

2. Verfahren nach Anspruch 1, wobei:
der Schritt des Empfangens des Ethernet-Rahmens, Erkennen der MAC-Adresse gemäß der Ursprungs-MAC-Adresse des Ethernet-Rahmens und Bestimmen des erkannten zugeordneten Anschlusses der MAC-Adresse als den ersten Anschluss der MAC-Adresse Folgendes umfasst:
Empfangen des Ethernet-Rahmens, Erkennen der MAC-Adresse gemäß der MAC-Adresse des Ethernet-Rahmens, Hinzufügen des erkannten zugeordneten Anschlusses der MAC-Adresse in eine Sprunganschlussmenge und Bestimmen des erkannten zugeordneten Anschlusses der MAC-Adresse als den ersten Anschluss der MAC-Adresse, wobei die Sprunganschlussmenge alle zugeordneten Anschlüsse der MAC-Adresse umfasst, die dem Springen unterzogen werden (401).

3. Verfahren nach Anspruch 2, das ferner Folgendes umfasst:
wenn der zugeordnete Anschluss der MAC-Adresse zum ersten Mal einem Springen unterzogen wird, nachdem die MAC-Adresse erkannt worden ist, Hinzufügen des zugeordneten Anschlusses der MAC-Adresse nach dem Springen in die Sprunganschlussmenge und Verwenden des Anschlusses nach dem Springen als einen zweiten Anschluss der MAC-Adresse (402); wenn der zugeordnete Anschluss der MAC-Adresse nicht zum ersten Mal einem Springen unterzogen wird und der zugeordnete Anschluss der MAC-Adresse nach dem Springen nicht in der Sprunganschlussmenge ist, Hinzufügen des zugeordneten Anschlusses der MAC-Adresse nach dem Springen in die Sprunganschlussmenge.

4. Verfahren nach einem der Ansprüche 1 bis 3, wobei:
das Verfahren nach dem Bestimmen des zweiten Anschlusses als den Schleifenfehleranschluss ferner Folgendes umfasst:
Senden von Schleifenfehleralarminformationen, wobei die Schleifenfehleralarminformationen Schleifenfehleranschlussinformationen führen (404).

5. Verfahren nach einem der Ansprüche 1 bis 3, wobei:
das Verfahren nach dem Bestimmen des zweiten Anschlusses als den Schleifenfehleranschluss ferner Folgendes umfasst:
Unterbrechen der Dienste des Schleifenfehleranschlusses (405).

6. Verfahren nach einem der Ansprüche 1 bis 3, wobei:
das Verfahren, falls die Gesamtzahl von Sprüngen des zugeordneten Anschlusses der MAC-Adresse in der spezifizierten Zeit kleiner als der voreingestellte Schwellenwert ist, ferner das Zurücksetzen eines Zählwerts auf null ohne Ausführen irgendeiner anderen Verarbeitung umfasst.

7. Ethernet-Verteilervorrichtung (60), die Folgendes umfasst:
ein Empfangsmodul (601), das konfiguriert ist, einen Ethernet-Rahmen zu empfangen;
ein MAC-Adressenerkennungsmodul (602), das konfiguriert ist, eine MAC-Adresse gemäß einer Ursprungs-MAC-Adresse des Ethernet-Rahmens zu erkennen und einen erkannten zugeordneten Anschluss der MAC-Adresse als einen ersten Anschluss der MAC-Adresse zu bestimmen; und
ein Schleifenfehlerbestimmungsmodul (603), das konfiguriert ist: wenn der zugeordnete Anschluss der MAC-Adresse zum ersten Mal einem Springen unterzogen wird, nachdem die MAC-Adresse erkannt worden ist, den Anschluss nach dem Springen als einen zweiten Anschluss der MAC-Adresse zu verwenden, wobei der Anschluss ein Anschluss in der Schleife ist oder ein Anschluss ist, der zu der Schleife hin gerichtet ist; und den zweiten Anschluss der MAC-Adresse als einen Schleifenfehleranschluss zu bestimmen, falls die Gesamtzahl von Sprüngen des zugeordneten Anschlusses der MAC-Adresse in einer spezifizierten Zeit größer als ein oder gleich einem voreingestellten Schwellenwert ist.

8. Vorrichtung nach Anspruch 7, wobei das Schleifenfehlerbestimmungsmodul Folgendes umfasst:
ein Zeitmessungsmodul (6031), das konfiguriert ist, den Anschluss nach dem Springen als einen zweiten Anschluss der MAC-Adresse zu verwenden und die Zeitmessung zu starten, wenn der zugeordnete Anschluss der MAC-Adresse zum ersten Mal einem Springen unterzogen wird, nachdem die MAC-Adresse erkannt worden ist; und
ein Zählwertbeurteilungsmodul (6032), das konfiguriert ist, den zweiten Anschluss als einen Schleifenfehleranschluss zu bestimmen, falls die Gesamtzahl von Sprüngen des zugeordneten Anschlusses der MAC-Adresse in der spezifizierten Zeit größer als ein oder gleich einem voreingestellten Schwellenwert ist.

9. Vorrichtung nach Anspruch 7 oder 8, wobei die Ethernet-Verteilervorrichtung ferner Folgendes umfasst:
ein Alarmierungsmodul (604), das konfiguriert ist, Schleifenfehleralarminformationen zu senden, nachdem der zweite Anschluss als der Schleifenfehleranschluss bestimmt worden ist, wobei die Schleifenfehleralarminformationen Schleifenfehleranschlussinformationen führen.

10. Vorrichtung nach Anspruch 7 oder 8, wobei die Ethernet-Verteilervorrichtung ferner Folgendes umfasst:
ein Unterbrechungsmodul (605), das konfiguriert ist, die Dienste des Schleifenfehleranschlusses zu unterbrechen, nachdem der zweite Anschluss als der Schleifenfehleranschluss bestimmt worden ist.

11. Ethernet-System, das wenigstens eine Ethernet-Verteilervorrichtung nach einem der Ansprüche 7 bis 10 umfasst, wobei:
die Ethernet-Verteilervorrichtung konfiguriert ist: einen Ethernet-Rahmen zu empfangen, eine MAC-Adresse gemäß einer Ursprungs-MAC-Adresse des Ethernet-Rahmens zu erkennen und einen erkannten zugeordneten Anschluss der MAC-Adresse als einen ersten Anschluss der MAC-Adresse zu bestimmen; wenn der zugeordnete Anschluss der MAC-Adresse zum ersten Mal einem Springen unterzogen wird, nachdem die MAC-Adresse erkannt worden ist, den Anschluss nach dem Springen als einen zweiten Anschluss der MAC-Adresse zu verwenden, wobei der Anschluss ein Anschluss in der Schleife ist oder ein Anschluss ist, der zu der Schleife hin gerichtet ist; und den zweiten Anschluss der MAC-Adresse als einen Schleifenfehleranschluss zu bestimmen, falls die Gesamtzahl von Sprüngen des zugeordneten Anschlusses der MAC-Adresse in einer spezifizierten Zeit größer als ein oder gleich einem voreingestellten Schwellenwert ist.

## Revendications

1. Procédé de localisation de boucle Ethernet, comprenant les étapes suivantes :
recevoir une trame Ethernet, apprendre une adresse MAC selon une adresse MAC source de la trame Ethernet, et déterminer un port associé appris de l'adresse MAC comme premier port de l'adresse MAC (301) ;
lorsque le port associé de l'adresse MAC subit un saut pour la première fois après que l'adresse MAC a été apprise, utiliser le port après le saut comme second port de l'adresse MAC, où le port est un port dans la boucle ou un port faisant face à la boucle (302) ; et
déterminer le second port de l'adresse MAC comme port de défaillance de boucle si le nombre total de sauts du port associé de l'adresse MAC dans un temps spécifié est supérieur ou égal à un seuil prédéterminé (303).

2. Procédé selon la revendication 1, dans lequel :
l'étape de réception de la trame Ethernet, d'apprentissage de l'adresse MAC selon l'adresse MAC source de la trame Ethernet, et de détermination du port associé appris de l'adresse MAC comme premier port de l'adresse MAC comprend les étapes suivantes :
recevoir la trame Ethernet, apprendre l'adresse MAC selon l'adresse MAC de la trame Ethernet, ajouter le port associé appris de l'adresse MAC dans un ensemble de ports de saut, et de déterminer le port associé appris de l'adresse MAC comme premier port de l'adresse MAC, où l'ensemble de ports de saut comprend tous les ports associés de l'adresse MAC qui subissent un saut (401).

3. Procédé selon la revendication 2, comprenant en outre les étapes suivantes :
lorsque le port associé de l'adresse MAC subit un saut pour la première fois après que l'adresse MAC a été apprise, ajouter le port associé de l'adresse MAC après le saut dans l'ensemble de ports de saut, et utiliser le port après le saut comme second port de l'adresse MAC (402) ; lorsque le port associé de l'adresse MAC subit un saut, non pour la première fois, et lorsque le port associé de l'adresse MAC après le saut n'est pas dans l'ensemble de ports de saut, ajouter le port associé de l'adresse MAC après le saut dans l'ensemble de ports de saut.

4. Procédé selon l'une quelconque des revendications 1 à 3, dans lequel :
après avoir déterminé le second port comme port de défaillance de boucle, le procédé comprend en outre l'étape suivante :
envoyer des informations d'alarme de défaillance de boucle, où les informations d'alarme de défaillance de boucle acheminent des informations de port de défaillance de boucle (404).

5. Procédé selon l'une quelconque des revendications 1 à 3, dans lequel :
après avoir déterminé le second port comme port de défaillance de boucle, le procédé comprend en outre l'étape suivante :
interrompre les services du port de défaillance de boucle (405).

6. Procédé selon l'une quelconque des revendications 1 à 3, dans lequel :
si le nombre total de sauts du port associé de l'adresse MAC dans le temps spécifié est inférieur au seuil prédéterminé, le procédé comprend en outre de réinitialiser une valeur de comptage à zéro sans procéder à aucun autre traitement.

7. Dispositif de commutation Ethernet (60), comprenant :
un module de réception (601), configuré pour recevoir une trame Ethernet ;
un module d'apprentissage d'adresse MAC (602), configuré pour apprendre une adresse MAC selon une adresse MAC source de la trame Ethernet, et déterminer un port associé appris de l'adresse MAC comme premier port de l'adresse MAC ;
un module de détermination de défaillance de boucle (603) configuré pour : lorsque le port associé de l'adresse MAC subit un saut pour la première fois après que l'adresse MAC a été apprise, utiliser le port après le saut comme second port de l'adresse MAC, où le port est un port dans la boucle ou un port faisant face à la boucle ; et déterminer le second port de l'adresse MAC comme port de défaillance de boucle si le nombre total de sauts du port associé de l'adresse MAC dans un temps spécifié est supérieur ou égal à un seuil prédéterminé.

8. Dispositif selon la revendication 7, dans lequel le module de détermination de défaillance de boucle comprend :
un module de minutage (6031), configuré pour utiliser le port après le saut comme second port de l'adresse MAC et commencer le minutage lorsque le port associé de l'adresse MAC subit un saut pour la première fois après que l'adresse MAC a été apprise ; et
un module de jugement de comptage (6032), configuré pour déterminer le second port comme port de défaillance de boucle si le nombre total de sauts du port associé de l'adresse MAC dans le temps spécifié est supérieur ou égal au seuil prédéterminé.

9. Dispositif selon la revendication 7 ou la revendication 8, dans lequel le dispositif de commutation Ethernet comprend en outre :
module d'émission d'alarme (604), configuré pour envoyer des informations d'alarme de défaillance de boucle après que le second port a été déterminé comme port de défaillance de boucle, où les informations d'alarme de défaillance de boucle acheminent des informations de port de défaillance de boucle.

10. Dispositif selon la revendication 7 ou la revendication 8, dans lequel le dispositif de commutation Ethernet comprend en outre :
un module d'interruption (605), configuré pour interrompre des services du port de défaillance de boucle après que le second port a été déterminé comme port de défaillance de boucle.

11. Système Ethernet, comprenant au moins un dispositif de commutation Ethernet selon l'une quelconque des revendications 7 à 10, dans lequel :
le dispositif de commutation Ethernet est configuré pour : recevoir une trame Ethernet, apprendre une adresse MAC selon une adresse MAC source de la trame Ethernet, et déterminer un port associé appris de l'adresse MAC comme premier port de l'adresse MAC ; lorsque le port associé de l'adresse MAC subit un saut pour la première fois après que l'adresse MAC a été apprise, utiliser le port après le saut comme second port de l'adresse MAC, où le port est un port dans la boucle ou un port faisant face à la boucle ; et déterminer le second port de l'adresse MAC comme port de défaillance de boucle si le nombre total de sauts du port associé de l'adresse MAC dans un temps spécifié est supérieur ou égal à un seuil prédéterminé.
